# EUROPÄISCHE PATENTANMELDUNG

(11) **EP 4 124 836 A1**
(43) Veröffentlichungstag der Anmeldung: **01.02.2023**
(21) Anmeldenummer: 21188027.3
(22) Anmeldetag: 27.07.2021
(51) Int. Cl.: G01F 1/58, G01F 15/02, B22D 11/055

(54) **VERFAHREN ZUR KOMPENSATION VON STÖRGRÖSSEN BEI EINER DURCHFLUSSMESSUNG VON FLÜSSIGKEITEN MITTELS EINES MAGENTISCH-INDUKTIVEM DURCHFLUSSMESSGERÄTES**

(71) Anmelder: Primetals Technologies Austria GmbH, 4031 Linz (AT)
(72) Erfinder: Hartl, Franz, 4720 Kallham (AT); Husakovic, Adnan, 4150 Rohrbach (AT); Krump, Richard, 4072 Alkoven (AT); Tushev, Anton, 91056 Erlangen (DE)
(74) Vertreter: Metals@Linz

(57) **Zusammenfassung**

Die Erfindung ist auf dem Gebiet der Durchflussmessung von Flüssigen mittels eines magnetisch-induktivem Durchflussmessgerätes.

Die Aufgabe der vorliegenden Erfindung ist es ein Verfahren zur Verfügung zu stellen, welches die verfälschte Durchflussmessung korrigiert.

Die Aufgabe wird gelöst durch ein Verfahren zur Kompensation von Störgrößen, bevorzugt Störgrößen durch magnetische Felder, bei einer Durchflussmessung von Flüssigkeiten mittels eines magnetisch-induktivem Durchflussmessgerätes (1), welches aufgrund der Störgröße eine fehlerhaftes Durchflussmenge (22) liefert. Eine tatsächliche Durchflussmenge (23) wird mithilfe der fehlerhaftem Durchflussmenge (22), sowie einem datenbasierten Modell (20) der Störgröße ermittelt. Es werden charakteristische Einflussparameter der Störgröße als Eingangsparameter (21) für das datenbasierte Modell (20) verwendet.

Die Aufgabe wird auch durch eine Auswerteeinrichtung (25) zur Durchführung des Verfahrens gelöst. Des Weiteren umfasst die Erfindung einen Elektrolichtbogenofen (30) mit einem Kühlsystem (27), welches einen Zufluss (28) und einen Abfluss (29) aufweist und jeweils magnetisch-induktives Durchflussmessgerät (1) umfasst. Die Durchflussmessgeräte (1) weisen jeweils eine Auswerteeinrichtung (25) auf.

## Beschreibung

### Bezeichnung der Erfindung

Verfahren zur Kompensation von Störgrößen bei einer Durchflussmessung von Flüssigkeiten mittels eines magnetisch-induktivem Durchflussmessgerätes

### Gebiet der Technik

Die Erfindung ist auf dem Gebiet der Durchflussmessung von Flüssigen mittels eines magnetisch-induktivem Durchflussmessgerätes.

Die Erfindung geht aus von einem Verfahren zur Kompensation von Störgrößen, bevorzugt Störgrößen durch magnetische Felder, bei einer Durchflussmessung von Flüssigkeiten mittels eines magnetisch-induktivem Durchflussmessgerätes, welches aufgrund der Störgröße eine fehlerhaftes Durchflussmenge liefert. Die Erfindung geht weiters aus von einer Auswerteeinrichtung und von einem elektrischen Lichtbogenofen mit einem Kühlsystem.

### Stand der Technik

Die Messung von Durchflussmengen flüssiger Medien hat bei Industrieanlagen eine hohe Bedeutung. Es gibt unterschiedlichste Methoden der Durchflussmessung. Eine sehr vorteilhafte Durchflussmessung wird mithilfe von magnetisch-induktiven Durchflussmessgeräten durchgeführt. Diese haben den Vorteil, dass dadurch kein Druckabfall in einem Rohrleitungssystem verursachen und der Einbau in einem kurzen geraden Rohrabschnitt möglich ist. Das Arbeitsprinzip des magnetisch-induktivem Durchflussmessgerätes basiert auf dem Faraday'schen Gesetz der elektromagnetischen Induktion. Nach diesem Prinzip wird beim Durchgang eines leitfähigen Mediums durch ein Magnetfeld eine Spannung erzeugt, die proportional zur Geschwindigkeit des Mediums, der Dichte des Magnetfeldes und der Länge des Leiters ist. Der Durchflusswert wird anhand der Geschwindigkeit und des Rohrinnendurchmessers ermittelt. Für eine genaue Messung ist ein präzises und reproduzierbares elektromagnetisches Erregerfeld erforderlich.

In einer Umgebung in welcher Störgrößen vorhanden sind, welche dieses elektromagnetische Erregerfeld beeinflussen, kann die Messsignalauswertung gestört werden und die ermittelte Durchflussmessung kann nicht mehr zuverlässig erfolgen.

Eine besondere Aufgabe dieser Durchflussmessungen ist die zuverlässige und genaue Erkennung von Leckagen im Kühlsystem von einem Elektrolichtbogenofen. Leckagen im Kühlsystem bergen ein hohes Gefahrenpotential, da der Kontakt von Kühlwasser mit flüssigem Stahl zu schweren Unfällen führen kann. Durch die hohe Temperatur von flüssigem Stahl kann es zu einer spontanen Verdampfung von Wasser kommen, Dissoziation von Wasser oder eine Gefahr durch entstehenden explosiven Wasserstoff.

Aus diesem Grund befinden sich Durchflussmesser in der Vorlauf- und in der Rücklaufleitung. Der Durchfluss in der Rücklaufleitung muss gleich dem Durchfluss in der Vorlaufleitung sein. Sollte der Durchflussmessung einen Unterschied ergeben liegt entweder eine Leckage vor - welche ein hohes Gefahrenpotential bedeutet - oder die Messung ist mit einem Fehler behaftet.

In der Umgebung von einem Elektrolichtbogenofen sind Störgrößen vorhanden, welche die Durchflussmessung verfälschen.

### Zusammenfassung der Erfindung

Die Aufgabe der vorliegenden Erfindung ist es ein Verfahren zur Verfügung zu stellen, welches die verfälschte Durchflussmessung korrigiert.

Die Aufgabe wird gelöst durch ein Verfahren welches eine tatsächliche Durchflussmenge mithilfe der fehlerhaftem Durchflussmenge, sowie eines datenbasierten Modells der Störgröße ermittelt.
Als Eingangsparameter für des datenbasierte Modell dienen charakteristische Einflussparameter der Störgröße.

Das datenbasierte Modell wird beispielsweise anhand von Daten, welche in einem bestimmten Zeitraum erfasst werden, erstellt. Dieser Zeitraum kann beispielsweise zumindest einige Stunden, zumindest einige Tage oder eine Woche sein. Das Modell kann dann laufend anhand von erfassten Daten online optimiert werden. Das datenbasierte Modell wird bevorzugt durch die Methode der Support Vector Regression erstellt.

Eine bevorzugte Ausführungsform sieht vor, dass mithilfe der Durchflussmessung eine Durchflussmenge von Kühlmittel, bevorzugt Kühlwasser, bei einem elektrischen Lichtbogenofen bestimmt wird. Die charakteristischen Einflussparameter sind zumindest ein Elektrodenstrom, eine Primärspannung, eine Sekundärspannung, eine gesamte harmonische Verzerrung und/oder eine Gesamtleistung des elektrischen Lichtbogenofens. Für die Anwendung bei einem elektrischen Lichtbogenofen kann ein Modell individuell für einen bestimmten Lichtbogenofen erstellt werden. Es ist aber auch denkbar, dass ein generalisiertes Modell zum Einsatz kommt, welches für jeden beliebigen elektrischen Lichtbogenofen zum Einsatz kommen kann. Im Anwendungsfall des generalisierten Modells werden Tree Based Models (xGBoost), lineare Regression Modelle, Support Vector Regression (SVR) Modelle und / oder neuronale Netze verwendet.

Eine vorteilhafte Ausführung sieht vor, dass zusätzliche charakteristische Einflussparameter eine aktuelle Betriebsphase des elektrischen Lichtbogenofens, bevorzugt eine Zündphase, eine Bohrphase, eine Hauptschmelzphase und / oder eine Flachbadphase ist.
Die Betriebsphase ist beispielsweise der Elektrodenregelung aufgrund der aktuellen eingebrachten Energie bzw. der harmonischen Verzerrungen der Stromsignale bekannt. Diese Information kann an das Modell weitergegeben werden. Die Berücksichtigung der Betriebsphasen werden beispielsweise ab einer bestimmten Gesamtleistung - bevorzugt ab einer Gesamtleistung von größer als 25% - des elektrischen Lichtbogenofens aktiviert.

Eine zweckmäßige Ausführung sieht vor, dass ein charakteristischer Einflussparameter eine Temperatur der Flüssigkeit ist.

Die Aufgabe wird auch gelöst durch eine Auswerteeinrichtung umfassend Eingänge für charakteristische Einflussparameter und ein Computerprogramm durch Durchführung des oben beschriebenen Verfahrens und einen Ausgang zur Übermittlung einer tatsächliche Durchflussmenge.

Die Aufgabe wird weiters gelöst durch einen elektrischen Lichtbogenofen umfassend ein Kühlsystem mit zumindest einem Zufluss und zumindest einem Abfluss, wobei an dem zumindest einen Zufluss und dem zumindest einen Abfluss, jeweils ein magnetisch-induktives Durchflussmessgerät zur Bestimmung der Durchflussmenge angebracht ist. Die jeweils angebrachten magnetisch-induktives Durchflussmessgeräte umfassen jeweils eine zuvor beschriebene Auswerteeinrichtung, wobei jeweils Ausgänge der Auswerteeinrichtung mit einer Vergleichsvorrichtung verbunden sind. Die Vergleichsvorrichtung ist derart ausgestaltet, dass eine Differenz von tatsächlicher Durchflussmenge des Zuflusses und tatsächlicher Durchflussmenge des Abflusses identifiziert wird.

Kurze Beschreibung der Zeichnungen
- Fig. 1: eine schematische Elektrodenanordnung für einen elektrischen Lichtbogenofen.
- Fig. 2: ein beispielhafter Verlauf der Harmonischen Frequenzen des Stromverlaufes.
- Fig. 3: eine fehlerhafte Durchflussmessung.
- Fig. 4: elektrischer Lichtbogenofen mit einem Kühlsystem.

### Beschreibung der Ausführungsformen

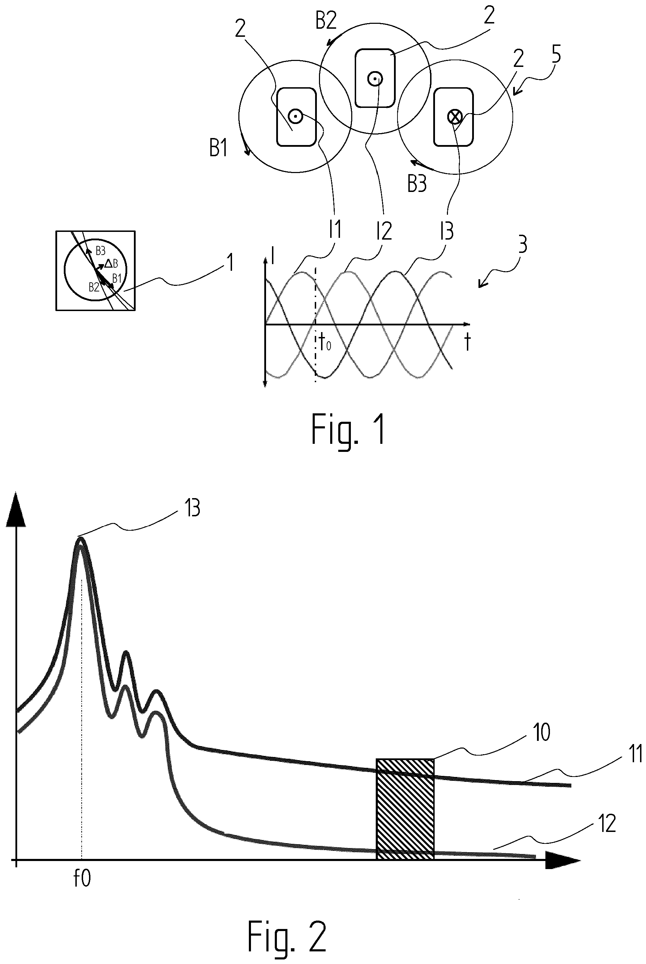

In der Fig. 1 ist schematisch ein Elektrodenanordnung 5 für einen elektrischen Lichtbogenofen dargestellt. Die Elektrodenanordnung 5 besteht aus drei Elektroden 2. Durch die Elektroden 2 fließt ein Strom I1, I2 und I3 und es bilden sich drei magnetische Felder mit jeweils einer magnetischen Flussdichte B1, B2 und B3. Im Diagramm 3 ist der zeitliche Verlauf der Ströme I1, I2 und I3 dargestellt. Im Diagramm 3 ist ein Zeitpunkt t₀ dargestellt. Ein magnetisch-induktivem Durchflussmessgerätes 1, welches sich in der Nähe der Elektrodenanordnung 5 befindet, ist dafür vorgesehen eine Kühlwasser Durchflussmenge zu bestimmen. Die magnetischen Felder der einzelnen Elektroden üben zum Zeitpunkt t₀ entsprechend ihrer magnetischen Flussdichte B1, B2 und B3 ein Störfeld mit der magnetischen Flussdichte ΔB auf das magnetisch-induktivem Durchflussmessgerätes 1 aus. Dieses Störfeld verfälscht die Durchflussmessung des magnetisch-induktivem Durchflussmessgerätes 1. Diese Störfeld ändert sich entsprechend dem veränderlichen Strom I1, I2 und I3 über die Zeit t. Es ist somit keine konstantes Störfeld, sondern ein zeitlich sich veränderliches.

In der Fig. 2 ist ein beispielhafter Verlauf der Harmonischen Frequenzen des Stromverlaufes für unterschiedliche Phasen während des Betriebes mit dem elektrischen Lichtbogenofen gezeigt. Die Frequenz f0 stellt die Frequenz der Grundschwingung dar. In eine Arbeitsfrequenzbereich 10 liegt der Frequenzbereich, in welchem das magnetisch-induktivem Durchflussmessgerätes 1 arbeitet. Ein Frequenzverlauf des Einschmelzvorgangs 11 weist höhere harmonische Anteile im Arbeitsfrequenzbereich 10 auf, als beispielsweise ein Frequenzverlauf für die Flüssigbaderwärmung 12. Es zeigt sich also, dass auch die unterschiedlichen Betriebsphasen einen unterschiedlich großen Einfluss auf Durchflussmessung haben können. Das Problem, dass sich ergibt, hängt von sehr vielen unterschiedlichen Parameter und Betriebszuständen ab.

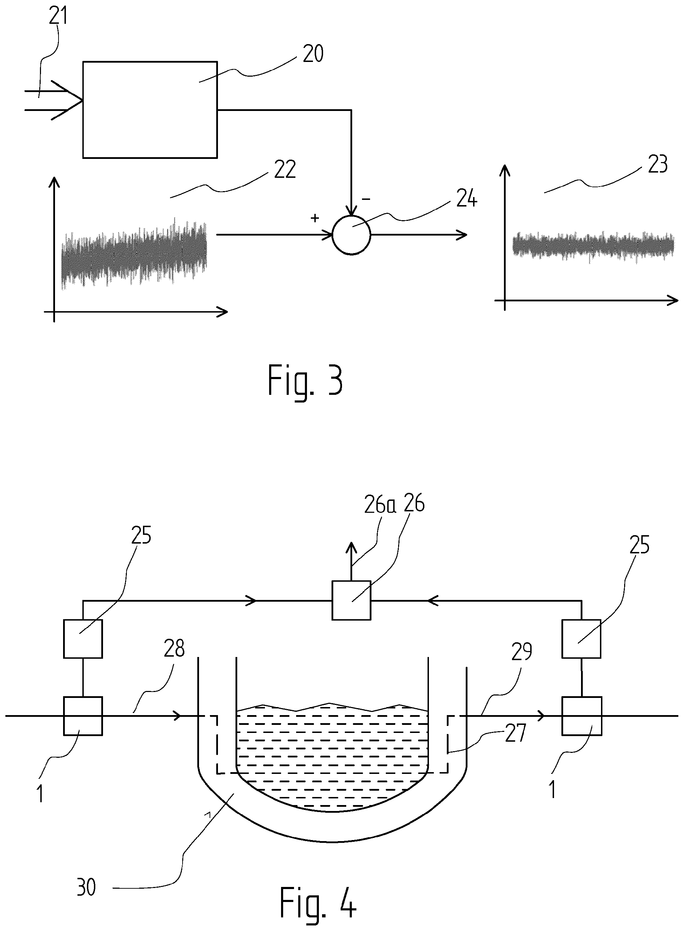

In Fig. 3 ist eine fehlerhafte Durchflussmessung 22 dargestellt. In einem datenbasierten Modell 20, welches verschiedenste Eingangsparameter 21 aufweist, wird die Störgröße ermittelt. Die fehlerhafte Durchflussmessung 22 wird durch die ermittelte Störgröße an einem Subtraktionsglied 24 korrigiert, wodurch die tatsächliche Durchflussmenge 23 ermittelt wird.

In der Fig. 4 ist ein Elektrischer Lichtbogenofen 30 mit einem Kühlsystem 27 schematisch dargestellt. Dieser weist einen Zufluss 28 und einen Abfluss 29 für Kühlmittel auf. Es ist jeweils am Zufluss 28 und am Abfluss 29 ein magnetisch-induktives Durchflussmessgerät 1 angeordnet. Den magnetisch-induktives Durchflussmessgeräten 1 nachgeordnet ist eine Auswerteeinrichtung 25 vorhanden, welche mittels des datenbasierten Modells eine tatsächliche Durchflussmenge bestimmt und jeweils der Vergleichsvorrichtung 26 übermittelt. Die Vergleichsvorrichtung 26 kann aus den übermittelten tatsächlichen Durchflussmengen sofort eine Abweichung des Durchflusses von Zufluss 28 und Abfluss 29 erkennen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Durchflussmessgerätes
- 2: Elektroden
- 3: Diagramm
- 5: Elektrodenanordnung
- 10: Arbeitsfrequenzbereich
- 11: Einschmelzvorgangs
- 12: Flüssigbaderwärmung
- 20: datenbasierten Modell
- 21: Eingangsparameter
- 22: fehlerhafte Durchflussmessung
- 23: tatsächliche Durchflussmenge
- 24: Subtraktionsglied
- 25: Auswerteeinrichtung
- 26: Vergleichsvorrichtung
- 26a: Abweichung
- 27: Kühlsystem
- 28: Zufluss
- 29: Abfluss
- 30: Elektrischer Lichtbogenofen
- B1, B2,B3: Magnetische Flussdichte
- ΔB: Störfeld
- t, t₀: Zeit
- I1, I2, I3: Strom
- f0: Frequenz

## Patentansprüche

1. Verfahren zur Kompensation von Störgrößen, bevorzugt Störgrößen durch magnetische Felder, bei einer Durchflussmessung von Flüssigkeiten mittels eines magnetisch-induktivem Durchflussmessgerätes (1), welches aufgrund der Störgröße eine fehlerhaftes Durchflussmenge (22) liefert, **dadurch gekennzeichnet, dass** eine tatsächliche Durchflussmenge (23) mithilfe der fehlerhaftem Durchflussmenge (22), sowie eines datenbasiertes Modell (20) der Störgröße ermittelt wird, wobei charakteristische Einflussparameter der Störgröße als Eingangsparameter (21) für das datenbasierte Modell (20) verwendet werden.

2. Verfahren zur Kompensation von Störgrößen bei einer Durchflussmessung von Flüssigkeiten mittels eines magnetisch-induktivem Durchflussmessgerätes (1) nach Anspruch 1, **dadurch gekennzeichnet, dass** mithilfe der Durchflussmessung eine Durchflussmenge (22) von Kühlmittel, bevorzugt Kühlwasser, bei einem elektrischen Lichtbogenofen (30) bestimmt wird, wobei als charakteristische Einflussparameter zumindest ein Elektrodenstrom, eine Primärspannung, eine Sekundärspannung, eine gesamte harmonische Verzerrung und/oder Gesamtleistung des elektrischen Lichtbogenofens (30) sind.

3. Verfahren zur Kompensation von Störgrößen bei einer Durchflussmessung von Flüssigkeiten mittels eines magnetisch-induktivem Durchflussmessgerätes (1) nach Anspruch 2, **dadurch gekennzeichnet, dass** zusätzliche charakteristische Einflussparameter eine aktuelle Betriebsphase des elektrischen Lichtbogenofens (30), bevorzugt eine Zündphase, eine Bohrphase, eine Hauptschmelzphase und / oder eine Flachbadphase, ist.

4. Verfahren zur Kompensation von Störgrößen bei einer Durchflussmessung von Flüssigkeiten mittels eines magnetisch-induktivem Durchflussmessgerätes (1) nach Anspruch 1-3, **dadurch gekennzeichnet, dass** ein charakteristischer Einflussparameter eine Temperatur der Flüssigkeit ist.

5. Auswerteeinrichtung (25) umfassend Eingänge für charakteristische Einflussparameter und ein Computerprogramm durch Durchführung des Verfahrens nach den Ansprüchen 1 - 4 und einen Ausgang zur Übermittlung einer tatsächliche Durchflussmenge (23).

6. Elektrischer Lichtbogenofen (30) umfassend ein Kühlsystem mit zumindest einem Zufluss (28) und zumindest einem Abfluss (29), wobei an dem zumindest einen Zufluss (28) und dem zumindest einen Abfluss (29), jeweils ein magnetisch-induktives Durchflussmessgerät (1) zur Bestimmung der Durchflussmenge angebracht ist und die jeweils angebrachten magnetisch-induktiven Durchflussmessgeräte (1) umfassen jeweils eine Auswerteeinrichtung (25) nach Anspruch 5, wobei jeweils Ausgänge der Auswerteeinrichtung mit einer Vergleichsvorrichtung (26) verbunden sind, wobei die Vergleichsvorrichtung (26) derart ausgestaltet ist, dass eine Differenz von tatsächlicher Durchflussmenge des Zufluss (28) und tatsächlicher Durchflussmenge (23) des Abfluss (29) identifiziert wird.
